# EUROPEAN PATENT SPECIFICATION

(11) **EP 2 429 812 B1**
(45) Date of publication and mention of the grant of the patent: **24.09.2014**
(21) Application number: 10726171.1
(22) Date of filing: 14.05.2010
(51) Int. Cl.: B32B 5/26, B32B 9/02

(54) **COMPOSITE MATERIAL**
VERBUNDWERKSTOFF
MATIÈRE COMPOSITE

(30) Priority: 14.05.2009 GB 0908257
(43) Date of publication of application: 21.03.2012
(73) Proprietor: Bentley Motors Limited, Crewe, Cheshire CW1 3PL (GB)
(72) Inventor: WATKINSON, Keith, Cheshire CW11 1HP (GB); STANG, Marc, Manchester M14 6XN (GB); FITZHUGH, Charles, Cheshire CW2 8FF (GB); EWAN, Gordon, Wemyss Bay PA18 6DW (GB)
(74) Representative: Wilson Gunn
(86) International application number: PCT/GB2010/050788
(87) International publication number: WO 2010/131047

(56) References cited:
- EP-A2- 0 850 806
- DE-A1- 10 126 702
- US-A- 5 932 056
- US-A- 6 099 938
- VAL-A CHICAGO INCORPORATED P 773.927.9442 F 773. 927.6832 700 WEST ROOT STREET CHICAGO, IL 60609 TEARMENDER.COM: 'FABRIC & LEATHER ADHESIVE', [Online] Retrieved from the Internet: <URL:http://www.tearmender.com/_pdfs/IntroM ediaBrochure.pdf>

## Description

The present invention relates to the use of a composite material as a blind and to a blind formed from the composite material.

Leather is widely used as a trim material, particularly for the interiors of quality vehicles, especially automobiles. Vehicles, particularly automobiles, tend to have a large glass area. In addition to a windscreen and a rear and side windows it is known to equip automobiles with a wholly or partially glazed roof. Consequently, blinds may be fitted to screen vehicle windows and glazed roofs to provide passenger privacy and shield passengers from the sunlight.

For aesthetic reasons it is desirable for the interior of any blinds to match or compliment the interior of a vehicle. To this end it is desired to use leather as a material to form blinds, for example roller blinds. However, there are significant practical drawbacks in using leather in this way as leather is dimensionally unstable when exposed to changes in temperature and humidity and subjected to sunlight. In fact, the applicant has found that natural leather suffers from dimensional changes of about 5% when exposed to heat equivalent to that experienced by an automotive window or roof blind during normal use. This degree of instability is unacceptable. Embodiments of the present invention seek to address this problem.

US 6099938 discloses a laminate which includes a leather layer cohesively bonded to a low melt adhesive layer and may include a scrim layer. The laminate is intended for automotive interior trim applications such as armrests, consoles, headrests and seating applications.

DE 10126702 discloses a method for producing leather covered interior trim components. A leather layer is bonded to a non-woven layer with an adhesive and formed into an interior trim part, and then moulded or backed with a thermoplastic polymer or foam.

US 5932056 discloses a method for making a stretch leather laminate comprising a stretchable leather laminated to a one-way stretch fabric. The laminate is used for the manufacture of shoes.

EP 0850806 discloses an interior fixture or fitting part for vehicles, particularly motor vehicles, comprising a rigid moulded support part, a textile layer bonded to the support part and a leather layer bonded to the textile layer.

According to a first aspect of the present invention there is provided the use of a composite material comprising a sheet of material consisting essentially of animal hide bonded to a textile material, as a blind.

It is found that by bonding a textile material to the hide material its dimensional stability is improved, making embodiments of the invention suitable for use in window and roof blind applications.

The sheet material is preferably leather. Leather is to be understood to be an appropriately treated animal hide. Whilst a bonded or processed "leather" material could be used its use is not preferred for aesthetic and quality reasons.

The leather is preferably skived. The leather preferably has a thickness in the range 0.5 to 0.7mm.

The leather is preferably shrink optimised in order to minimise subsequent shrinkage and dimensional instability.

The textile is preferably woven. It is preferably woven from a polyester yarn. The yarn preferably has a mass in the range 150 to 180 dTex. The textile is preferably coated and may be coated with a water based polyurethane coating. The coating may be applied at a rate in the range 125-145 g/m². The textile may have an overall mass per unit area in the range 150 - 170 g/m². The textile may have a thickness in the range 0.1 - 0.3 mm and preferably in the range 0.18 - 0.24mm. The textile preferably has a tensile strength of at least 250 N, more preferably at least 300 N. For a woven textile this relates to strength in both warp and weft directions.

The textile is preferably substantially light fast.

The textile and sheet material are preferably bonded together by way of an adhesive. The adhesive is preferably a hot melt adhesive. The adhesive is preferably provided in the form of one or more lay ups of film or web. The film or web preferably has a mass in the range of 28 - 90 g/m². Two or more lay ups of film may be employed to provide a sufficient mass of adhesive.

The adhesive preferably has a minimum activation temperature of 130°C and a maximum activation temperature of 180°C.

The adhesive film or films is/are preferably sandwiched between the sheet material and textile to form a lay up, and the lay up placed into a heated static press. The materials are preferably subjected to a pressure of at least 4 N/cm² in the press. The materials preferably remain under pressure within the press for 10 to 30 seconds. At least one side of the press is preferably heated to a temperature in the range 170°C - 190°C and the other side of the press to a temperature in the range 50°C - 70°C.

On removal from the press the bonded material is preferably trimmed to size with a knife. The composite material may be used to form a blind, such as a roller blind.

According to a second aspect of the present invention there is provided an automotive window or roof blind comprising a composite material comprising a sheet of material consisting essentially of animal hide bonded to a textile material with an adhesive, the composite material being attached to a roller blind shaft at one end and to an elongate support at an opposite end.

In order that the invention may be more clearly understood an embodiment thereof will now be described, by way of example, with reference to the accompanying drawings of which:
Figure 1 is a side view of a lay up of materials for forming a composite material according to the invention;
Figure 2 is a perspective view of the materials of figure 1 after bonding; and
Figure 3 is a roller blind formed from the composite material of figure 2.

Referring to the drawings, a composite material is formed by assembling a lay up comprising:
(i) a pre-shrunk sheet of skived leather 1 of approximate thickness 0.7mm with its grain side directed to the outside of the lay up;
(ii) two layers of a transparent copolyamide adhesive film 2, each of approximate thickness 15 - 25 µm, such as that sold by Protechnic of 66 rue des Fabrique, 6870 Cernay, Cedex, France under the name TEXIRON 199; and
(iii) a UV stable woven polyester textile 3 woven with black warp and weft yarns of approximately 167, dTex coated with a grey water based polyurethane coating at the rate of about 35 g/m² to give an overall textile mass of approximately 164 g/m².

In an alternative embodiment the two layers of adhesive film described at (ii) above are replaced with a single layer of a transparent copolyamide adhesive film of approximate thickness 80 µm. Suitable adhesive film is available from Tag Composites and Carpets GmbH, Krefeld, Germany.

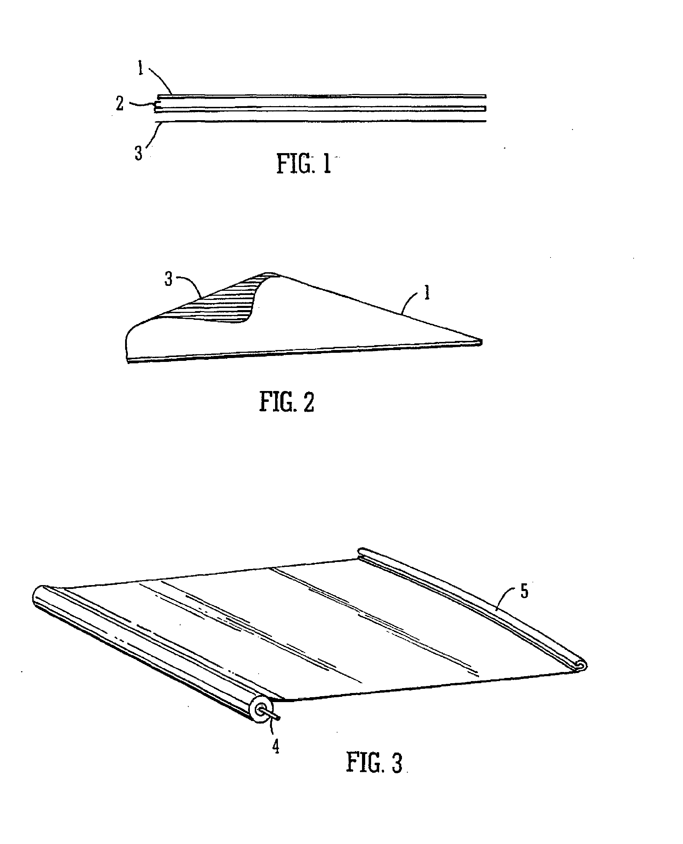

The layers are superimposed with the adhesive film layers 2 between the leather 1 and the textile 3 and the assembled lay ups placed between the heated plates of a press. The lay up is arranged so that the leather lies against a plate heated to about 60°C and the textile 3 lies against a plate heated to about 180°C. The plates are then brought together under a pressure of 4.5 N/cm² for a period of from 10 to 30 seconds. This causes the adhesive 2 to melt and flow onto the surface of the leather and into the textile 3 bonding them together to form a composite material shown in Figure 2.

The composite material is then trimmed to size with a knife.

The trimmed material is then attached to a roller blind shaft 4 at one end and to an elongate support 5 at the other end for fitment to a window or roof of an automobile, or other vehicle or application, with the leather 1 facing the inside of the vehicle and the textile 3 facing the glazing.

It is found that bonding the leather to the chosen fabric significantly improves the dimensional stability of the leather, as compared to leather on its own when exposed to sunlight, changes of temperature and humidity. Whereas leather on its own may suffer shrinkage of up to 5%, composites according to the invention suffer negligible shrinkage.

The above embodiment is described by way of example only. Many variations are possible without departing from the invention as defined by the appended claims.

## Claims

1. The use of a composite material comprising a sheet of material consisting essentially of animal hide (1) bonded to a textile material (3) as a blind.

2. The use of a composite material as claimed in claim 1, wherein the sheet material is leather.

3. The use of a composite material as claimed in claim 2, wherein the leather has a thickness in the range 0.5 to 0.7mm.

4. The use of a composite material as claimed in any preceding claim, wherein the textile material is woven.

5. The use of a composite material as claimed in claim 4, wherein the textile material is woven from a polyester yarn.

6. The use of a composite material as claimed in claim 5, wherein the yarn has a mass in the range 150 to 180 dTex.

7. The use of a composite material as claimed in any preceding claim, wherein the textile material is coated.

8. The use of a composite material as claimed in claim 7, wherein the textile material is coated with a water based polyurethane coating.

9. The use of a composite material as claimed in any preceding claim, wherein the textile material has a mass per unit area in the range 150 to 170 g/m².

10. The use of a composite material as claimed in any preceding claim, wherein the textile material has a thickness in the range 0.1 to 0.3 mm.

11. The use of a composite material as claimed in any preceding claim, wherein the textile material is substantially light fast.

12. The use of a composite material as claimed in any preceding claim, wherein the textile and sheet materials are bonded together by way of an adhesive (2).

13. The use of a composite material as claimed in any preceding claim as a roller blind or an automotive window or roof blind.

14. An automotive window or roof blind comprising a composite material comprising a sheet of material consisting essentially of animal hide (1) bonded to a textile material (3) with an adhesive (2), the composite material being attached to a roller blind shaft (4) at one end and to an elongate support (5) at an opposite end.

15. An automotive window or roof blind as claimed in claim 14 wherein the adhesive is a hot melt adhesive with a minimum activation temperature of 130°C and a maximum activation temperature of 180°C.

## Patentansprüche

1. Die Verwendung eines Verbundmaterials, das ein flächiges Material umfasst, im Wesentlichen aus Tierhaut (1) bestehend, die mit einem textilen Material (3) zu einer Jalousie zusammengefügt ist.

2. Die Verwendung eines Verbundmaterials nach Anspruch 1, **dadurch gekennzeichnet, dass** das flächige Material Leder ist.

3. Die Verwendung eines Verbundmaterials nach Anspruch 2, **dadurch gekennzeichnet, dass** das Leder eine Dicke in einem Bereich zwischen 0,5 mm bis 0,7 mm aufweist.

4. Die Verwendung eines Verbundmaterials nach einem der vorhergehenden Ansprüche, **dadurch gekennzeichnet, dass** das textile Material gewebt ist.

5. Die Verwendung eines Verbundmaterials nach Anspruch 4, **dadurch gekennzeichnet, dass** das textile Material aus einem Polyestergarn gewebt ist.

6. Die Verwendung eines Verbundmaterials nach Anspruch 5, **dadurch gekennzeichnet, dass** das Garn ein Gewicht in einem Bereich zwischen 150 dTex bis 180 dTex aufweist.

7. Die Verwendung eines Verbundmaterials nach einem der vorhergehenden Ansprüche, **dadurch gekennzeichnet, dass** das textile Material beschichtet ist.

8. Die Verwendung eines Verbundmaterials nach Anspruch 7, **dadurch gekennzeichnet, dass** das textile Material mit einer wasserbasierten Polyurethan-Schicht beschichtet ist.

9. Die Verwendung eines Verbundmaterials nach einem der vorhergehenden Ansprüche, **dadurch gekennzeichnet, dass** das textile Material ein Gewicht pro Flächeneinheit im Bereich zwischen 150 g/m² bis 170 g/m² aufweist.

10. Die Verwendung eines Verbundmaterials nach einem der vorhergehenden Ansprüche, **dadurch gekennzeichnet, dass** das textile Material eine Dicke in einem Bereich zwischen 0,1 mm bis 0,3 mm aufweist.

11. Die Verwendung eines Verbundmaterials nach einem der vorhergehenden Ansprüche, **dadurch gekennzeichnet, dass** das textile Material erheblich lichtfest ist.

12. Die Verwendung eines Verbundmaterials nach einem der vorhergehenden Ansprüche, **dadurch gekennzeichnet, dass** die textilen und flächigen Materialien mittels eines Klebers (2) zusammengefügt sind.

13. Die Verwendung eines Verbundmaterials nach einem der vorhergehenden Ansprüche als Rolljalousie oder als Fahrzeugfenster- oder Dachjalousie.

14. Eine Fahrzeugfenster- oder Dachjalousie, die ein Verbundmaterial aufweist, das ein flächiges Material umfasst, im Wesentlichen aus Tierhaut (1) bestehend, die mit einem Kleber (2) an ein textiles Material (3) angefügt ist und wobei das Verbundmaterial an einem Ende an eine Rolljalousie-Welle (4) angefügt ist und an einem gegenüberliegenden Ende an eine längliche Halterung (5) angefügt ist.

15. Eine Fahrzeugfenster- oder Dachjalousie nach Anspruch 14, **dadurch gekennzeichnet, dass** der Kleber ein Heißschmelzkleber ist mit einer minimalen Aktivierungstemperatur von 130 °C und einer maximalen Aktvierungstemperatur von 180 °C.

## Revendications

1. Utilisation à titre d'écran d'une matière composite comprenant une feuille d'une matière constituée essentiellement d'une peau d'animal (1) fixée à une matière textile (3).

2. Utilisation d'une matière composite selon la revendication 1 dans laquelle la feuille de matière est du cuir.

3. Utilisation d'une matière composite selon la revendication 2 dans laquelle le cuir a une épaisseur comprise entre 0.5 et 0.7 mm.

4. Utilisation d'une matière composite selon l'une quelconque des revendications précédentes dans laquelle la matière textile est tissée.

5. Utilisation d'une matière composite selon la revendication 4 dans laquelle la matière textile est tissée avec un fil de polyester.

6. Utilisation d'une matière composite selon la revendication 5 dans laquelle le fil a une masse comprise entre 150 et 180 dTex.

7. Utilisation d'une matière composite selon d'une quelconque des revendications précédentes dans laquelle la matière textile a un revêtement.

8. Utilisation d'une matière composite selon la revendication 7 dans laquelle la matière textile est revêtue d'une couche de polyuréthane à base d'eau.

9. Utilisation d'une matière composite selon l'une quelconque des revendications précédentes dans laquelle la matière textile a une masse par unité de surface comprise entre 150 et 170 g/m².

10. Utilisation d'une matière composite selon l'une quelconque des revendications précédentes dans laquelle la matière textile a une épaisseur comprise entre 0.1 et 0.3 mm.

11. Utilisation d'une matière composite selon l'une quelconque des revendications précédentes dans laquelle la matière textile est substantiellement résistante à la lumière.

12. Utilisation d'une matière composite selon l'une quelconque des revendications précédentes dans laquelle le textile et les matières en feuille sont fixées les unes aux autres au moyen d'un adhésif (2).

13. Utilisation d'une matière composite selon l'une quelconque des revendications précédentes comme store enrouleur ou fenêtre automotrice ou store de toit.

14. Fenêtre automotrice ou store de toit comportant une matière composite comportant une feuille de matière consistant essentiellement d'une peau d'animal (1) fixée à une matière textile (3) par un adhésif (2), la matière composite étant fixée à un arbre (4) de store enrouleur à une de ses extrémités et à un support allongé (5) à une extrémité opposée.

15. Fenêtre automotrice ou écran de toit selon la revendication 14 dans lequel l'adhésif est une colle thermo-fusible avec une température d'activation minimum de 130°C et une température d'activation maximum de 180°C.
